# EUROPÄISCHE PATENTSCHRIFT

(11) **EP 2 661 786 B1**
(45) Veröffentlichungstag und Bekanntmachung des Hinweises auf die Patenterteilung: **14.06.2017**
(21) Anmeldenummer: 11785628.6
(22) Anmeldetag: 09.11.2011
(51) Int. Cl.: H01M 10/44, H01M 10/42, H02J 7/00

(54) **BATTERIE MIT AUTONOMEN CELL-BALANCING**
BATTERY WITH AUTONOMOUS CELL BALANCING
BATTERIE À ÉQUILIBRAGE AUTONOME DES CELLULES

(30) Priorität: 05.01.2011 DE 102011002452
(43) Veröffentlichungstag der Anmeldung: 13.11.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: BUTZMANN, Stefan, 71717 Beilstein (DE)
(74) Vertreter: Bee, Joachim
(86) Internationale Anmeldenummer: PCT/EP2011/069729
(87) Internationale Veröffentlichungsnummer: WO 2012/092992

(56) Entgegenhaltungen:
- EP-A2- 1 603 212
- DE-A1-102006 022 394
- US-A1- 2009 195 079

## Beschreibung

Die vorliegende Erfindung betrifft eine Vorrichtung zum Balancing (Ladungsausgleich) der Batteriezellen einer Batterie mit mehreren in Serie geschalteten Batteriezellen, wobei erfindungsgemäß keine Steuerung durch einen Mikrocontroller notwendig ist, die Vorrichtung also autonom operieren kann.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbaren Leistung erfüllen zu können, werden eine hohe Zahl von Batteriezellen in Serie geschaltet. Der Ausfall einer Batteriezelle kann wegen der Serienschaltung zum Ausfall der Batterie und dieser wiederum zu einem Ausfall des Gesamtsystems führen, weshalb insbesondere für sicherheitsrelevante Anwendungen hohe Anforderungen an die Zuverlässigkeit der Batterie gestellt werden. Um den Zustand der Batterie und der einzelnen Batteriezellen möglichst genau erfassen und so einen drohenden Ausfall einer Batteriezelle rechtzeitig erkennen zu können, werden neben anderen Parametern der Batterie beziehungsweise Batteriezellen insbesondere auch die Spannungen der Batteriezellen regelmäßig gemessen. Im Stand der Technik sind zahlreiche Verfahren bekannt, die ein sogenanntes Cell-Balancing durchführen, also die Ladungszustände der verschiedenen Batteriezellen einer Batterie einander anzugleichen suchen, was sich positiv auf die Lebensdauer der Batterie auswirkt.

Die Batterie ist hierzu mit Einheiten ausgestattet, die die Zellspannungen der einzelnen Batteriezellen sowie optional weitere Messgrößen wie Batterietemperatur und Batteriestrom bestimmen und an eine zentrale Steuereinheit (beispielsweise ein Mikrocontroller) übermitteln. Die Steuereinheit berechnet aus den übermittelten Messdaten für jede Batteriezelle einen jeweiligen Ladungszustand und erzeugt die für die Durchführung des Cell-Balancings notwendigen Steuersignale, welche in der Batterie den Ladungsausgleich unter den Batteriezellen bewirken, indem beispielsweise Batteriezellen mit einem höheren Ladungszustand teilweise entladen werden. Dabei wird die Steuereinheit außerhalb der Batterie angeordnet, um weitere Aufgaben übernehmen zu können. Dies bringt jedoch den Nachteil mit sich, dass relativ aufwendige Sicherheitsmaßnahmen wie im Datenpfad angeordnete Isolatoren ergriffen werden müssen, um im Fehlerfall einen Kurzschluss zwischen der hohen Batteriespannung (bei batteriebetriebenen Antriebssystemen oft mehrere hundert Volt) und den von außen berührbaren, im Niederspannungsnetz angeordneten Teilen wie der Steuereinheit zu verhindern.

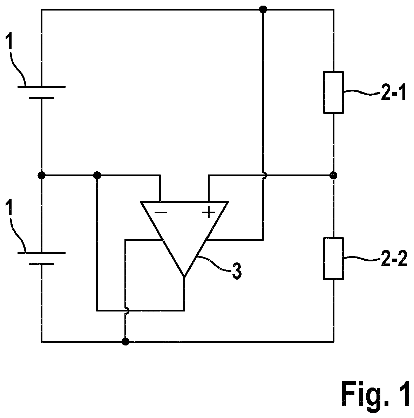

Die Erfinder der vorliegenden Erfindung haben eine Ladungsausgleichseinheit vorgeschlagen, welche die Ladungszustände zweier in Serie geschalteter Batteriezellen aneinander angleichen kann und in Figur 1 dargestellt ist. Dazu wird parallel zu den beiden Batteriezellen ein Spannungsteiler geschaltet, der die Gesamtspannung der beiden in Serie geschalteten Batteriezellen halbiert und so eine Referenzspannung zur Verfügung stellt. Diese Referenzspannung wird mit der Spannung an dem Verbindungspunkt zwischen den beiden seriengeschalteten Batteriezellen verglichen, wofür ein einfacher Differenzverstärker, Komparator oder Vergleicher verwendet werden kann. Der Ausgang des Differenzverstärkers wird an den Verbindungspunkt angeschlossen. Die Versorgungsspannungsanschlüsse des Differenzverstärkers werden mit dem höchsten und dem niedrigsten Potential der beiden Batteriezellen verbunden.

Besteht nun an den Eingängen des Differenzverstärkers eine Differenzspannung, weil die Zellspannungen der beiden benachbarten Batteriezellen voneinander abweichen, so dass die Spannung des Verbindungspunktes nicht exakt gleich der Referenzspannung ist, wird der Differenzverstärker einen Ausgangsstrom eines entsprechenden Vorzeichens ausgeben, welcher der Ursache der Differenzspannung entgegenwirkt, das heißt diejenige Batteriezelle, welche eine höhere Zellspannung aufweist, entlädt.

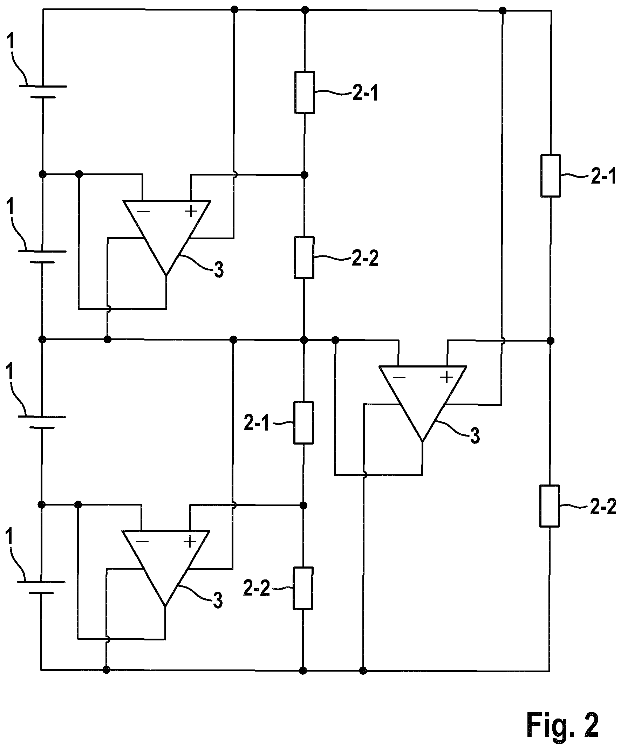

Außerdem wurde eine Möglichkeit vorgeschlagen, Paare solcher Ladungsausgleichseinheiten zu verschalten, wodurch durch eine rekursive Verschaltung beliebige Zahlen 2^n von Batteriezellen verschaltet werden können (Figur 2). Die Beschränkung auf Potenzen von zwei ist allerdings wenig wünschenswert. Außerdem bedeuten die in den Ladungsausgleichseinheiten, von denen mit steigender Anzahl von Batteriezellen immer mehr parallel vorgesehen werden, verschalteten Spannungsteiler eine unerwünscht hohe Belastung der Batterie.

### Offenbarung der Erfindung

Erfindungsgemäß wird daher eine Vorrichtung zum Cell-Balancing der Batteriezellen einer Batterie mit einer geradzahligen Anzahl n von in Serie geschalteten Batteriezellen eingeführt. Die geradzahlige Anzahl n beträgt dabei mindestens 4 und die n Batteriezellen gliedern sich in n/2 Paare von jeweils benachbarten Batteriezellen. Die Vorrichtung umfasst eine Mehrzahl von mit jeweils einem Zugeordneten der Paare von benachbarten Batteriezellen verbundene oder verbindbare Ladungsausgleichseinheiten und eine mit den Ladungsausgleichseinheiten verbundene Messvorrichtung. Die Ladungsausgleichseinheiten sind ausgebildet, die Zellspannungen der Batteriezellen des zugeordneten Paares von benachbarten Batteriezellen aneinander anzugleichen. Die Messvorrichtung ist ausgebildet, einen zu einer minimalen Zellpaarspannung aller Zellpaarspannungen der Paare von Batteriezellen proportionalen Strom zu erzeugen und an eine Anzahl n/2 von in Serie geschalteten Widerständen auszugeben. Außerdem ist eine Anzahl n/2 erster Vergleicher vorgesehen, welche jeweils einen mit dem ersten oder dem zweiten Pol der ersten Batteriezelle eines zugeordneten Paares von Batteriezellen verbundenen ersten Eingang, einen mit einem zweiten der jeweiligen benachbarten Widerstände verbundenen zweiten Eingang und einen mit einer Steuerelektrode einer jeweiligen Entladeeinheit verbundenen Ausgang aufweisen und ausgebildet sind, eine am ersten Eingang anliegende erste Spannung mit einer am zweiten Eingang anliegenden zweiten Spannung zu vergleichen und ein von einem Ergebnis des Vergleichs abhängiges Steuersignal auszugeben. Die Entladeeinheiten sind jeweils zu einem zugeordneten Paar von Batteriezellen parallel geschaltet und ausgebildet, abhängig von dem Steuersignal einen Entladestrom aus dem jeweiligen Paar von Batteriezellen fließen zu lassen.

Die Erfindung hat den Vorteil, dass ein Cell-Balancing einer beliebigen geradzahligen Anzahl Batteriezellen einer Batterie vollständig autark vorgenommen werden kann, also eine Steuerung durch eine außerhalb der Batterie angeordneten Steuereinheit entfallen kann. Dazu ist lediglich eine einfache elektronische Schaltung notwendig, welche eine minimale Zellpaarspannung aller Paare von Batteriezellen bestimmt und die Zellpaarspannungen der einzelnen Paare von Batteriezellen mit dieser minimalen Zellspannung vergleicht. Ist die Zellpaarspannung eines gegebenen Paares von Batteriezellen höher als die minimale Zellpaarspannung, wird das Paar von Batteriezellen durch die zugeordnete Entladeeinheit entladen. Die Ladungszustände jedes Paares von Batteriezellen werden dabei, wie in Bezug auf Figur 1 erläutert, aneinander angeglichen.

Erfindungsgemäß können auf diese Weise aufwendige Maßnahmen zur Isolation der Batterie gegenüber dem Niederspannungsnetz, in dem eine Steuereinheit zur Steuerung des Cell-Balancings gewöhnlich angeordnet wird, entfallen.

Jede Ladungsausgleichseinheit enthält vorzugsweise einen mit einem ersten Pol einer ersten Batteriezelle eines der jeweiligen Ladungsausgleichseinheit zugeordneten Paares von Batteriezellen und einem zweiten Pol einer zweiten Batteriezelle des zugeordneten Paares von Batteriezellen verbundenen oder verbindbaren Spannungsteiler und einen zweiten Vergleicher. Der zweite Vergleicher besitzt dabei einen mit einem Mittenabgriff des Spannungsteilers verbundenen ersten Eingang, einen mit einem zweiten Pol der ersten Batteriezelle und einem ersten Pol der zweiten Batteriezelle verbundenen oder verbindbaren zweiten Eingang und einen mit dem zweiten Eingang verbundenen Ausgang und ist ausgebildet, einen von einer Spannungsdifferenz zwischen einer zweiten Spannung am ersten Eingang und einer dritten Spannung am zweiten Eingang abhängigen Ausgangsstrom auszugeben. Der Spannungsteiler ist ausgebildet, an seinem Mittenabgriff eine Teilspannung auszugeben, die der Hälfte einer Zellpaarspannung zwischen dem ersten Pol der ersten Batteriezelle und dem zweiten Pol der zweiten Batteriezelle des Paares von Batteriezellen entspricht.

Eine solche Ladungsausgleichseinheit ist einfach aufzubauen und vermag es, die Ladungszustände der beiden mit der Ladungsausgleichseinheit verbundenen Batteriezellen fortlaufend aneinander anzugleichen, so dass die beiden Batteriezellen auch in gleichem Maße altern.

Die Vorrichtung kann über eine Anzahl (n/2-1) Potentialreplikationseinrichtungen verfügen, welche jeweils zwischen zwei benachbarte Widerstände der Mehrzahl von Widerständen geschaltet und ausgebildet sind, ein Potential an einem ersten Pol einer ersten oder zweiten Batteriezelle eines der jeweiligen Potentialreplikationseinrichtung zugeordneten Paares von Batteriezellen zu replizieren und an einen ersten der jeweiligen zwei benachbarten Widerstände auszugeben.

Die Potentialreplikationseinrichtungen ermöglichen es, den von der Messvorrichtung ausgegebenen Ausgangsstrom bei einem durch das von der Potentialreplikationseinrichtung zu replizierende Potential vorgegebenen definierten Potential durch einen mit der Potentialreplikationseinrichtung verbundenen Widerstand zu leiten. Dadurch kann die über dem jeweiligen Widerstand abfallende Spannung, die der minimalen Zellpaarspannung entspricht, einfach mit der Zellpaarspannung des jeweiligen Paares von Batteriezellen verglichen werden.

Die Potentialreplikationseinrichtungen können beispielsweise jeweils einen Differenzverstärker und einen npn-Transistor umfassen, wobei die Basis des npn-Transistors mit dem Ausgang des Differenzverstärkers und der Emitter des npn-Transistors mit dem invertierenden Eingang des Differenzverstärkers verbunden sind. Der zur minimalen Zellpaarspannung proportionale Strom fließt dann vom Kollektor des npn-Transistors zu dessen Emitter, während die Rückkopplung der Emitterspannung auf den invertierenden Eingang des Differenzverstärkers sicherstellt, dass das Potential am Emitter des npn-Transistors weitestgehend gleich demjenigen am nichtinvertierenden Eingang des Differenzverstärkers ist.

Alternativ können die Potentialreplikationseinrichtungen jeweils einen pnp-Transistor und einen npn-Transistor umfassen, wobei eine Basis des pnp-Transistors mit dem ersten Pol der zugeordneten Batteriezelle, ein Emitter des pnp-Transistors mit einer Basis des npn-Transistors und ein Emitter des npn-Transistors mit dem ersten der jeweiligen zwei benachbarten Widerstände verbunden sind. Diese Ausführungsform der Potentialreplikationseinrichtungen hat den Vorteil, dass das Potential an der Basis des pnp-Transistors sehr genau am Emitter des npn-Transistors nachgebildet wird, weil sich die Basis-Emitter-Spannungen der beiden Transistoren gegenseitig wegheben. Dabei ist außerdem vorteilhaft, dass das Temperaturverhalten der Basis-Emitter-Spannungen der beiden Transistoren über weite Temperaturbereiche gleich oder mindestens sehr ähnlich ist, so dass die gegenseitige Kompensation der Basis-Emitter-Spannungen temperaturunabhängig funktioniert.

Die Entladeeinheiten enthalten vorzugsweise einen Strombegrenzungswiderstand und einen Schalter, wobei der Schalter ausgebildet ist, auf einen ersten logischen Pegel des Steuersignals den Entladestrom fließen zu lassen und auf einen zweiten logischen Pegel des Steuersignals einen Stromfluss zu unterbinden. Außerdem ist der Strombegrenzungswiderstand ausgebildet, den Entladestrom zu begrenzen. Diese Ausführungsform der Entladeeinheiten ist besonders einfach zu realisieren. Zudem besitzt sie den Vorteil, dass aufgrund des konstanten Strombegrenzungswiderstandes der Entladestrom abhängig von der Zellpaarspannung ist und deshalb der Entladestrom beim Cell-Balancing eines schon relativ weit entladenen Paares von Batteriezellen geringer ist als bei einem noch verhältnismäßig stark aufgeladenen. Grundsätzlich kann jedoch jede schaltbare Stromquelle, welche ausgebildet ist, auf einen ersten logischen Pegel des Steuersignals den Entladestrom fließen zu lassen und auf einen zweiten logischen Pegel des Steuersignals einen Stromfluss zu unterbinden, als Entladeeinheit verwendet werden.

Die Mehrzahl der seriengeschalteten Widerstände weisen vorzugsweise jeweils einen Widerstandswert auf, der einem Quotienten der minimalen Zellpaarspannung aller Zellpaarspannungen der Paare von Batteriezellen und des zu der minimalen Zellpaarspannung aller Zellpaarspannungen der Paare von Batteriezellen proportionalen Stroms entspricht.

Die Messvorrichtung kann eine Anzahl n/2 von Differenzverstärkern aufweisen, wobei jeder der Differenzverstärker ein Paar von Transistoren umfasst, deren Emitter oder Source miteinander und mit einem Eingang für eine Stromquelle und deren Steuerelektroden mit einem jeweiligen von zwei Signaleingängen des Differenzverstärkers verbunden sind.

Dabei sind bevorzugt der Eingang für die Stromquelle eines ersten der Differenzverstärker mit einer Stromquelle und der Kollektor oder die Drain eines der Transistoren des Paares von Transistoren mit dem Eingang für die Stromquelle eines weiteren der Differenzverstärker verbunden, so dass sich eine Kaskadierung der Differenzverstärker ergibt. Diese Kaskadierung von Differenzverstärkern besitzt den Vorteil, dass jeder der Differenzverstärker als Stromquelle für den darüber angeordneten Differenzverstärker wirkt. Aufgrund der Funktionsweise eines Differenzverstärkers mit zwei Zweigen fließt der Strom jedoch jeweils nur in einem Zweig des Differenzverstärkers, abhängig von den an den Eingängen des Differenzverstärkers anliegenden Spannungen. Daher kann ein Strom durch alle Differenzverstärker und somit durch die Messvorrichtung nur fließen, wenn die Spannung an beiden Eingängen gleich oder die Spannung über dem jeweiligen Paar von Batteriezelle oder über einer ausgewählten Batteriezelle des Paares von Batteriezellen größer als die Spannung über den am anderen Eingang des jeweiligen Differenzverstärkers angeschlossenen Widerstandes ist. Dadurch ergibt sich ein Regelsystem, dass den Strom am Ausgang der Messvorrichtung genau so einstellt, dass er proportional zu der minimalen Zellpaarspannung aller Zellpaarspannungen wird.

Ein zweiter Aspekt der Erfindung führt eine Batterie mit einer geradzahligen Mehrzahl größer oder gleich 4 von in Reihe geschalteter Batteriezellen und einer mit den Batteriezellen verbundenen Vorrichtung gemäß dem ersten Erfindungsaspekt ein.

Die Batteriezellen sind dabei bevorzugt Lithium-lonen-Batteriezellen.

Ein dritter Erfindungsaspekt betrifft ein Kraftfahrzeug mit einem elektrischen Antriebsmotor zum Antreiben des Kraftfahrzeuges und einer mit dem elektrischen Antriebsmotor verbundenen Batterie gemäß dem vorhergehenden Erfindungsaspekt.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein Paar von Batteriezellen mit einer Ladungsausgleichseinheit,
Figur 2 eine Verschaltung zweier Paare von Batteriezellen gemäß Figur 1 mit einer zusätzlichen Ladungsausgleichseinheit,
Figur 3 ein erstes Ausführungsbeispiel einer Messvorrichtung zum Einsatz im Rahmen der Erfindung,
Figur 4 ein zweites Ausführungsbeispiel einer Messvorrichtung zum Einsatz im Rahmen der Erfindung,
Figur 5 ein drittes Ausführungsbeispiel einer Messvorrichtung zum Einsatz im Rahmen der Erfindung, und
Figur 6 ein Ausführungsbeispiel eines erfindungsgemäßen zweiten Vergleichers und einer Entladeeinheit zum Einsatz im Rahmen der Erfindung.

### Ausführungsformen der Erfindung

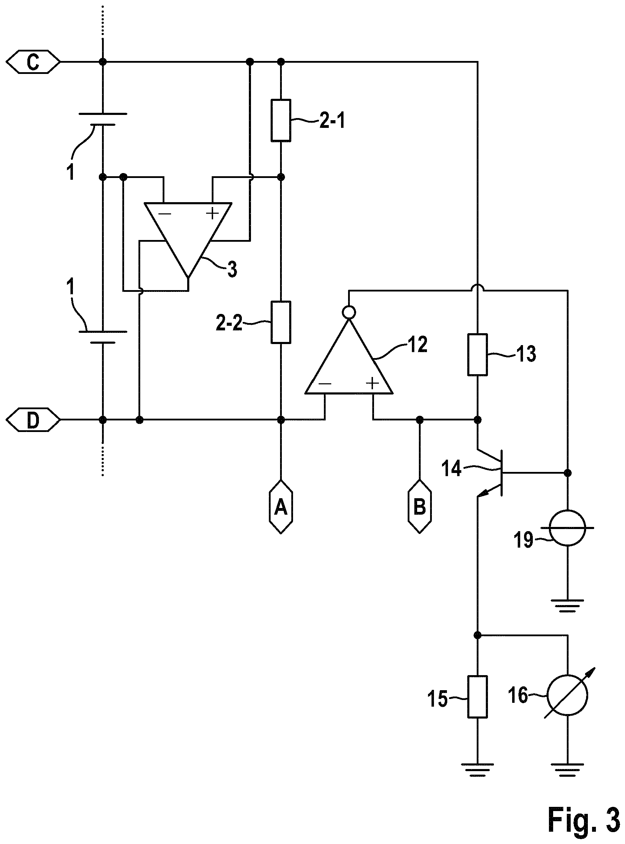

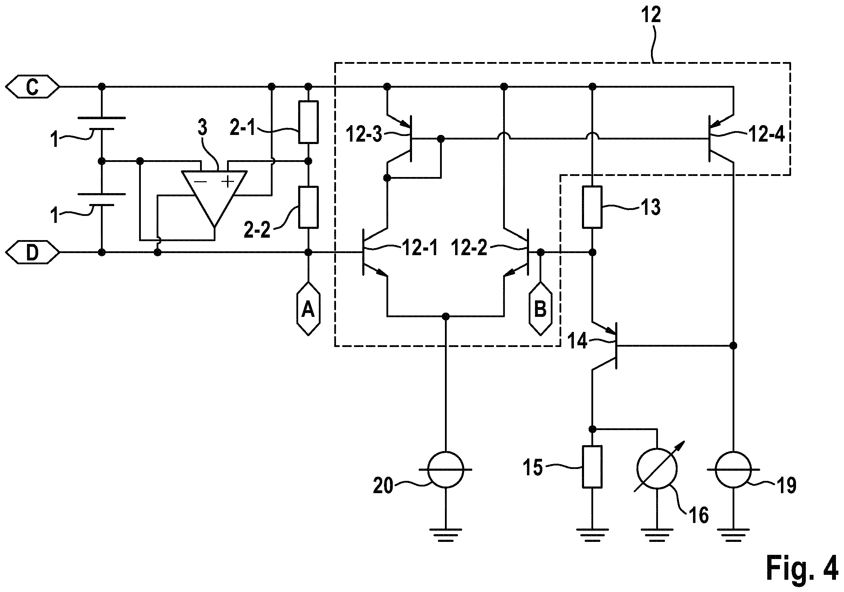

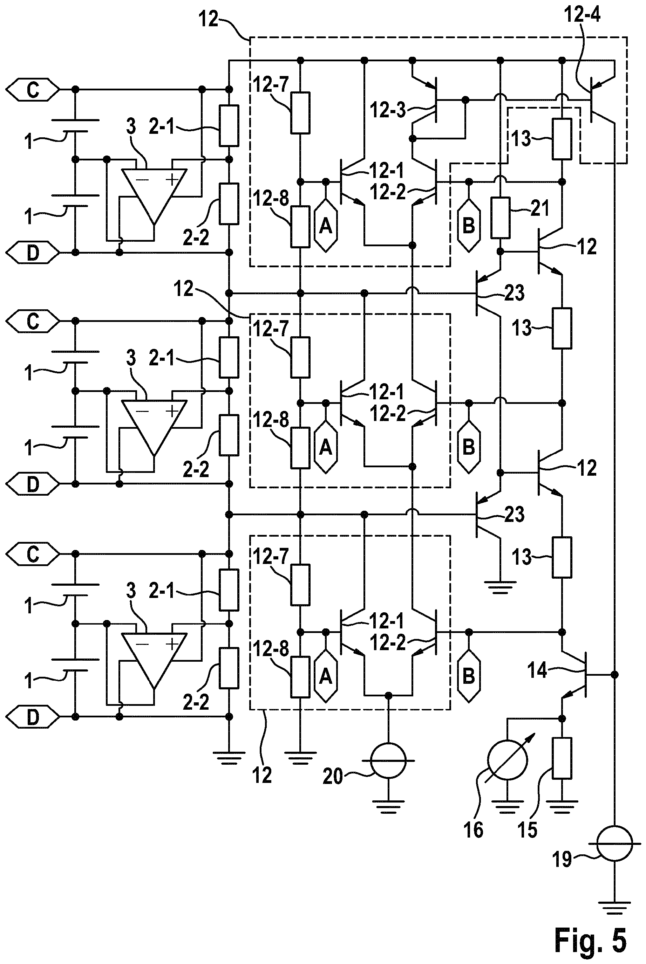

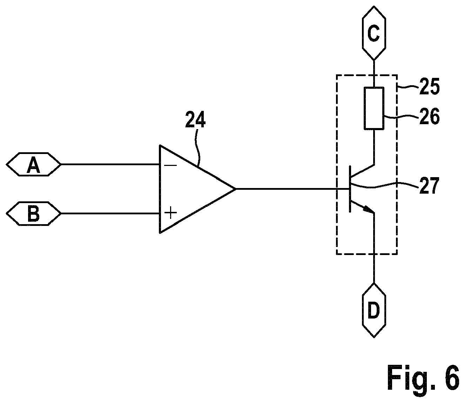

Figur 3 zeigt ein erstes Ausführungsbeispiel einer Messvorrichtung zum Einsatz im Rahmen der Erfindung. Die Figuren 3 und 4 dienen zur Erläuterung der Funktionsweise einer Messvorrichtung zum Einsatz im Rahmen der Erfindung. Figur 5 zeigt eine mögliche Implementation einer Messvorrichtung zur Verwendung mit einer Mehrzahl von Paaren von Batteriezellen. In den Figuren 3 bis 5 sind Anschlusspunkte A, B, C und D markiert, an welche erfindungsgemäß weitere Schaltungselemente anzuschließen sind, für die ein Beispiel in Figur 6 gezeigt wird. In Figur 6 sind die den Anschlusspunkten A, B, C und D jeweils zuzuordnenden Anschlüsse durch Verwendung identischer Kennzeichnungen bezeichnet.

Ein erster Pol einer der Batteriezellen 1 eines Paares von Batteriezellen 1, welches mit weiteren Paaren von Batteriezellen zu einem Strang in Reihe geschaltet ist, ist mit einem von zwei Eingängen eines Transimpedanzverstärkers 12 verbunden. Der zweite Eingang des Transimpedanzverstärkers 12 ist mit einem Anschluss eines Widerstandes 13 verbunden, dessen weiterer Anschluss wiederum mit einem Pol einer der Batteriezellen 1 des Paares von Batteriezellen verbunden ist. Im gezeigten Beispiel ist der Widerstand 13 mit einem zweiten Pol der verbleibenden Batteriezelle des Paares von Batteriezeiien verbunden, so dass im eingeschwungenen Zustand die Spannung über dem Widerstand 13 der Zellpaarspannung des Paares von Batteriezellen 1 entspricht. Es ist allerdings ebenso möglich, den Widerstand 13 mit dem Verbindungspunkt der beiden Batteriezellen 1 des Paares von Batteriezellen zu verbinden. In diesem Fall entspräche die Spannung über dem Widerstand 13 im eingeschwungenen Zustand auch nur der Zellspannung der unteren Batteriezelle 1 des Paares von Batteriezellen, welche allerdings durch die Ladungsausgleichseinheit, wie im Zusammenhang mit Figur 1 erläutert, gleich der Zellspannung der oberen Batteriezelle 1 des Paares von Batteriezeilen gehalten wird. Auch für alle weiteren Ausführungsformen der Erfindung gilt, dass die Widerstände 13 jeweils mit dem Verbindungspunkt eines Paares von Batteriezellen 1 verbunden werden können (gegebenenfalls über eine Potentialreplikationsvorrichtung).

Der Ausgang des Transimpedanzverstärkers 12 ist mit einer Steuerelektrode eines Stromventils 14 verbunden, welches im gezeigten Beispiel als npn-Transistor ausgeführt ist. Es können jedoch auch andere Transistortypen oder auch komplexere Schaltungen als Stromventil 14 zum Einsatz kommen. Das Stromventil ist zwischen den mit dem Transimpedanzverstärker 12 verbundenen Anschluss des Widerstandes 13 und die eigentliche Spannungsmessvorrichtung, die in allen Ausführungsbeispielen nur beispielhaft gezeigt ist, geschaltet. Diese Spannungsmessvorrichtung kann einen Referenzwiderstand 15 mit einem bekannten Widerstandswert und ein Voltmeter 16 umfassen, welches die über dem Referenzwiderstand 15 abfallende Spannung misst.

Der Transimpedanzverstärker 12 vergleicht die Zellpaarspannung des Paares von Batteriezellen 1 mit der über dem Widerstand 13 abfallenden Spannung und erzeugt einen Ausgangsstrom, dessen Größe proportional zur Differenz der beiden Spannungen ist. Dieser Ausgangsstrom gelangt an die Steuerelektrode des Stromventils 14, an welche eine optionale Sollstromquelle 19 angeschlossen sein kann. Diese Sollstromquelle 19 führt einen konstanten Strom und dient zur Arbeitspunkteinstellung des Stromventils 14. Der Ausgangsstrom des Transimpedanzverstärkers 12 - gegebenenfalls abzüglich des konstanten Stroms der Sollstromquelle 19 - steuert den Strom, den das Stromventil 14 passieren lässt. Je mehr Strom das Stromventil 14 passieren lässt, desto größer wird jedoch auch die Spannung, die über dem Widerstand 13 abfällt. Dies führt dazu, dass die Spannung an einem Eingang des Transimpedanzverstärkers 12 relativ zu der Spannung an dessen anderen Eingang ansteigt, wodurch die Differenz der Eingangsspannungen abnimmt und der Transimpedanzverstärker 12 auch seinen Ausgangsstrom entsprechend verringert. Fließt jedoch zuwenig Strom über den Widerstand 13, wird der Transimpedanzverstärker 12 entsprechend wieder mehr Strom an die Steuerelektrode des Stromventils 14 fließen lassen.

Es ergibt sich dadurch eine Rückkopplung, die dazu führt, dass die Spannung über dem Widerstand 13 aufgrund der Regelwirkung der den Transimpedanzverstärker 12, den Widerstand 13 und das Stromventil 14 umfassenden Regelzelle gleich der Zellpaarspannung gehalten wird. Da die Eingänge des Transimpedanzverstärkers 12 idealerweise hochohmig ausgeführt sind, fließt der gesamte Strom, der durch den Widerstand 13 fließt, auch durch das Stromventil 14 und stellt aufgrund des linearen Zusammenhangs zwischen Spannung, Widerstand und Strom ein exaktes Maß für die Zellpaarspannung dar. Er könnte nun an anderer Stelle gemessen werden, wenn Interesse an seinem tatsächlichen Wert besteht, beispielsweise indem er über einen selbst nicht zur Messvorrichtung gehörenden Referenzwiderstand 15 geleitet wird und dadurch in eine Spannung umgewandelt wird, deren Höhe sich direkt aus der Zellpaarspannung ergibt und an ihrer Stelle unabhängig von den gewöhnlich hohen und variablen Potentialen an den Batteriepolen der Batteriezellen 1 und damit gefahrlos gemessen werden kann. Hierbei ist gegebenenfalls noch ein Korrekturfaktor zu berücksichtigen, der das Verhältnis des Betrages des Widerstands 13 zu dem des Referenzwiderstandes 15 angibt. Um eine Verfälschung des vom Stromventil 14 ausgegebenen Stroms durch den Basisstrom des im gezeigten Beispiel als Bipolartransistor ausgeführten Stromventiles 14 zu vermeiden, können beispielsweise ein MOSFET oder ein IGBT (Insulated Gate Bipolar Transistor) verwendet werden.

Figur 4 zeigt ein zweites Ausführungsbeispiel einer Messvorrichtung zum Einsatz im Rahmen der Erfindung, bei dem der Transimpedanzverstärker 12 als Differenzverstärker ausgeführt ist. Der Transimpedanzverstärker 12 besitzt einen Anschluss für eine Stromquelle 20, welche einen Strom in den Differenzverstärker einprägt. Abhängig davon, welcher der beiden Transistoren 12-1 und 12-2 der beiden Zweige des Differenzverstärkers die größere Eingangsspannung erhält, wird der Strom der Stromquelle 20 mehrheitlich entweder durch den einen Transistor oder den anderen fließen. Der durch den Transistor 12-1 fließende Strom wird über einen Stromspiegel, der die Transistoren 12-3 und 12-4 umfasst, gespiegelt und ausgegeben. Da die Funktionsweise eines Differenzverstärkers im Stand der Technik wohlbekannt ist, wird hier nicht weiter darauf eingegangen.

Im Unterschied zu dem Ausführungsbeispiel von Figur 3 ist das Stromventil 14 hier als pnp-Transistor ausgeführt, wodurch ein geringerer Ausgangsstrom des Transimpedanzverstärkers 12, ausgegeben durch den Transistor 12-4, zu einem Abfall der Spannung an der Steuerelektrode des Stromventils 14 und dadurch zu einer Erhöhung der Basis-Emitter-Spannung des als pnp-Transistor ausgeführten Stromventils führt. Die erhöhte Basis-Emitter-Spannung bewirkt wiederum einen Anstieg des Stroms durch das Stromventil 14, was im Ergebnis wieder zu der erwünschten Rückkopplung führt. Das Stromventil 14 könnte aber auch als npn-Transistor ausgeführt sein. In diesem Falle könnte der Transistor 12-3 einfach in den anderen Zweig des Differenzverstärkers geschaltet werden (zwischen den Pluspol der Batteriezelle 1 und den Transistor 12-2). Natürlich können auch hier wiederum anstelle von bipolaren Transistoren auch beispielsweise MOS-Transistoren entsprechender Polarität verwendet werden.

Die Stromquelle 19 führt vorzugsweise einen Strom, der der Hälfte des Stroms der Stromquelle 20 entspricht. Im eingeschwungenen Zustand der Regelzelle wird sich der Strom der Stromquelle 20 idealerweise zu gleichen Teilen auf die beiden Zweige des Differenzverstärkers aufteilen. In diesem Fall wird auch der Transistor 12-4 einen Strom ausgeben, der der Hälfte des Stroms der Stromquelle 20 entspricht, so dass die Spannung an der Steuerelektrode des Stromventils 14 konstant bleibt. Anstelle der Stromquelle 19 könnten jedoch beispielsweise auch ein einfacher Widerstand oder andere geeignete Schaltmittel zum Einsatz kommen.

Figur 5 zeigt ein drittes Ausführungsbeispiel einer Messvorrichtung zum Einsatz im Rahmen der Erfindung. Bei diesem Ausführungsbeispiel werden mehrere Regelzellen aufgebaut und kaskadiert. Jede Regelzelle ist dabei mit einem Paar von Batteriezellen 1 verbunden, wobei jedes Paar von Batteriezellen 1 wiederum über eine zugeordnete Ladungsausgleichseinheit verfügt. Die Transimpedanzverstärker 12 sind auch beim Beispiel der Figur 5 als Differenzverstärker aufgebaut, wobei jedoch der durch einen Zweig eines jeweiligen Differenzverstärkers fließende Strom als Stromquelle für den übergeordneten Differenzverstärker dient. Nur der unterste Differenzverstärker ist direkt mit einer Stromquelle 20 verbunden, welche beispielsweise gemeinsam mit der Stromquelle 19 als Stromspiegel aufgebaut sein kann. Allerdings sind selbstredend auch andere Realisationformen der Stromquellen 19 und 20 möglich.

Außer den Transimpedanzverstärkern 12 sind auch die Widerstände 13 kaskadiert. Da die Kaskade von Transimpedanzverstärkern aber nur einen einzigen Ausgangsstrom ausgibt, ist weiterhin nur ein Stromventil 14 vorgesehen, das als Transistor realisiert sein kann.

Um das Potential oberhalb jedes der Widerstände 13 an dasjenige des Anschlusspunktes des jeweils zugeordneten Paares von Batteriezellen 1 anzugleichen, ohne den Stromfluss durch die Widerstände 13 zu beeinflussen, wird außerdem bei den unteren Regelzellen jeweils eine Potentialreplikationseinrichtung vorgesehen, die beispielsweise ein Paar von komplementären Transistoren 22 und 23 umfassen kann. Um dabei den Strom durch die kaskadierten Transistoren 23 zu begrenzen, wird außerdem vorzugsweise ein Widerstand 21 vorgesehen. Anstelle der Transistoren 22 und 23 sowie des Widerstandes 21 können jedoch auch andere Schaltungen vorgesehen werden, die das Potential an den Widerständen 13 demjenigen an dem Kontaktpunkt zum Paar von Batteriezellen 1 angleichen.

Der mit den Batteriezellen 1 verbundene Eingang der Differenzverstärker kann einen aus Widerständen 12-7 und 12-8 gebildeten Spannungsteiler aufweisen, da andernfalls für den obersten Differenzverstärker kein ausreichend hohes Potential an den Kollektoren beziehungsweise für den untersten Differenzverstärker an den Emittern der Transistoren 12-1 und 12-2 mehr zur Verfügung stünde. Vorzugsweise wird hierbei jedoch nur ein Spannungsteiler verwendet, das heißt, der Spannungsteiler aus den Widerständen 12-7 und 12-8 kann entfallen und die Basis des Transistors 12-1 wird mit dem Verbindungspunkt der Widerstände 2-1 und 2-2 der Ladungsausgleichseinheit des zugeordneten Paares von Batteriezellen 1 verbunden.

Die Messvorrichtung von Figur 5 besitzt die besondere Eigenschaft, dass die Zellpaarspannungen von mehreren Paaren von Batteriezellen 1 gleichzeitig gemessen werden können, wobei jedoch nur die minimale Zellpaarspannung aller Paare von Batteriezellen 1 gemessen wird. Das heißt, dass der von der Kaskade der Differenzverstärker ausgegebene Strom bei dem Ausführungsbeispiel der Figur 5 proportional zu der kleinsten aller Zellpaarspannungen ist. Die Messvorrichtung der Figur 5 kann dabei selbstredend auch für nur zwei Paare von Batteriezellen 1 oder eine größere Zahl von Paaren von Batteriezellen 1 ausgeführt werden.

Erfindungsgemäß wird die minimale Zellpaarspannung aller Paare von Batteriezellen 1 bestimmt, um die Zellpaarspannungen der weiteren Paare von Batteriezellen 1 mit der minimalen Zellpaarspannung vergleichen und bei einer hinreichend großen Abweichung die Zellpaarspannungen der weiteren Paare von Batteriezellen 1 gezielt reduzieren zu können. Durch dieses Cell-Balancing, das hier jedoch jeweils gleichzeitig für ein Paar von Batteriezellen durchgeführt wird, werden die Ladungszustände aller Paare von Batteriezellen einander angeglichen, was sich positiv auf die Lebensdauer der Batterie auswirkt. Die jedem Paar von Batteriezellen jeweils zugeordnete Ladungsausgleichseinheit gleicht dabei wiederum die Zellspannungen der beiden zu einem Paar in Reihe geschalteten Batteriezellen einander an. Indem die Erfindung ein einfaches Mittel zur Bestimmung der minimalen Zellpaarspannung sowie Mittel zum Vergleichen der Spannung und zum Entladen der Paare von Batteriezellen zur Verfügung stellt, kann eine Vorrichtung zum Cell-Balancing realisiert werden, welche vollständig autark innerhalb der Batterie und ohne Einbeziehung von aufwendigen Komponenten wie Mikrocontrollern und dergleichen arbeiten kann.

Figur 6 zeigt ein Ausführungsbeispiel eines erfindungsgemäßen ersten Vergleichers 24 und einer Entladeeinheit 25 zum Einsatz im Rahmen der Erfindung. Der erste Vergleicher 24 ist bevorzugt als gewöhnlicher Differenzverstärker, beispielsweise auch als Operationsverstärker, ausgeführt, der eine Ausgangsspannung erzeugt, die proportional zu einer zwischen seinen beiden Eingängen bestehenden Spannungsdifferenz ist. Aufgrund der hohen Verstärkung des Differenzverstärkers führen bereits geringe Spannungsdifferenzen zu einer Sättigung der Ausgangsspannung des Differenzverstärkers, so dass diese Ausgangsspannung als binäres Steuersignal angesehen werden kann. Dieses Steuersignal wird an einen Steuereingang einer Entladeeinheit 25 ausgegeben, welche abhängig vom logischen Pegel des Steuersignals eines mit der Entladeeinheit 25 verbundenen Paares von Batteriezellen entlädt oder aber einen Stromfluss zwischen den Anschlusspunkten C und D durch die Entladeeinheit 25 hindurch unterbindet. Die Entladeeinheit 25 umfasst bevorzugt einen Schalttransistor 27, welcher beispielsweise als Bipolartransistor oder als Feldeffekttransistor ausgeführt sein kann. Der Schalttransistor 27 wird in diesem Fall direkt durch das von dem ersten Vergleicher 24 erzeugte Steuersignal geschaltet. Um den Stromfluss durch die Entladeeinheit 25 im Fall des Entladens des Paares von Batteriezellen zu begrenzen, ist bevorzugt ein Begrenzungswiderstand 26 vorgesehen.

In einer verbesserten Ausführungsvariante der Schaltung von Figur 6 kann einer der Eingänge des ersten Vergleichers 24 über eine Spannungsquelle mit dem zugeordneten Anschlusspunkt verbunden sein. Die Spannungsquelle erzeugt eine Offsetspannung, welche die Spannung an dem Eingang des ersten Vergleichers 24 entsprechend verändert. Dadurch wird der erste Vergleicher 24 den logischen Pegel des Steuersignals unter Berücksichtigung der Offsetspannung erzeugen. Dies bewirkt, dass eine mit dem ersten Vergleicher 24 und der Entladeeinheit 25 verbundene Batteriezelle erst dann entladen wird, wenn die Zellspannung der Batteriezelle um mindestens die Offsetspannung größer als die minimale Zellspannung ist, wodurch fehlerhaftes Entladen durch Störeffekte wie Rauschen, Lastsprünge oder sonstige dynamische Einflüsse vermieden werden kann.

## Patentansprüche

1. Eine Vorrichtung zum Cell-Balancing einer geradzahligen Anzahl n von in Serie geschalteten Batteriezellen (1) einer Batterie, wobei n mindestens 4 beträgt und sich die n Batteriezellen (1) in n/2 Paare von jeweils benachbarten Batteriezellen (1) gliedern, die Vorrichtung umfassend eine Mehrzahl von mit jeweils einem Zugeordneten der Paare von benachbarten Batteriezellen (1) verbundene oder verbindbare Ladungsausgleichseinheiten, welche ausgebildet sind, die Zellspannungen der Batteriezellen (1) des zugeordneten Paares von benachbarten Batteriezellen (1) aneinander anzugleichen, und eine mit den Ladungsausgleichseinheiten verbundene Messvorrichtung (12), welche ausgebildet ist, einen zu einer minimalen Zellpaarspannung aller Zellpaarspannungen der Paare von Batteriezellen (1) proportionalen Strom zu erzeugen und an eine Anzahl n/2 von in Serie geschalteten Widerständen (13) auszugeben, **gekennzeichnet durch** eine Anzahl n/2 erste Vergleicher (24), welche jeweils einen mit dem ersten oder dem zweiten Pol der ersten Batteriezelle (1) eines zugeordneten Paares von Batteriezellen (1) verbundenen ersten Eingang, einen mit einem zweiten der jeweiligen benachbarten Widerstände (13) verbundenen zweiten Eingang und einen mit einer Steuerelektrode einer von n/2 Entladeeinheiten (25) verbundenen Ausgang aufweisen und ausgebildet sind, eine am ersten Eingang des Vergleichers (24) anliegende erste Spannung mit einer am zweiten Eingang des Vergleichers (24) anliegenden zweiten Spannung zu vergleichen und ein von einem Ergebnis des Vergleichs abhängiges Steuersignal an die Steuerelektrode der jeweiligen Entladeeinheit (25) auszugeben, wobei die n/2 Entladeeinheiten (25) zu einem jeweiligen Paar von Batteriezellen (1) parallel geschaltet und ausgebildet sind, abhängig von dem Steuersignal einen Entladestrom aus dem jeweiligen Paar von Batteriezellen (1) fließen zu lassen.

2. Die Vorrichtung gemäß Anspruch 1, bei der jede Ladungsausgleichseinheit einen mit einem ersten Pol einer ersten Batteriezelle (1) eines der jeweiligen Ladungsausgleichseinheit zugeordneten Paares von Batteriezellen (1) und einem zweiten Pol einer zweiten Batteriezelle (1) des zugeordneten Paares von Batteriezellen (1) verbundenen oder verbindbaren Spannungsteiler (2-1, 2-2) und einen zweiten Vergleicher (3) enthält, wobei der zweite Vergleicher (3) einen mit einem Mittenabgriff des Spannungsteilers (2-1, 2-2) verbundenen ersten Eingang, einen mit einem zweiten Pol der ersten Batteriezelle (1) und einem ersten Pol der zweiten Batteriezelle (1) verbundenen oder verbindbaren zweiten Eingang und einen mit dem zweiten Eingang verbundenen Ausgang aufweist und ausgebildet ist, einen von einer Spannungsdifferenz zwischen einer zweiten Spannung am ersten Eingang und einer dritten Spannung am zweiten Eingang abhängigen Ausgangsstrom auszugeben, und wobei der Spannungsteiler (2-1, 2-2) ausgebildet ist, an seinem Mittenabgriff eine Teilspannung auszugeben, die der Hälfte einer Zellpaarspannung zwischen dem ersten Pol der ersten Batteriezelle (1) und dem zweiten Pol der zweiten Batteriezelle (1) des Paares von Batteriezellen (1) entspricht.

3. Die Vorrichtung gemäß einem der Ansprüche 1 oder 2, mit einer Anzahl (n/2-1) Potentialreplikationseinrichtungen (22, 23), welche jeweils zwischen zwei benachbarte Widerstände (13) der Mehrzahl von Widerständen (13) geschaltet und ausgebildet sind, ein Potential an einem ersten Pol einer ersten oder zweiten Batteriezelle (1) eines der jeweiligen Potentialreplikationseinrichtung (22, 23) zugeordneten Paares von Batteriezellen (1) zu replizieren und an einen ersten der jeweiligen zwei benachbarten Widerstände (13) auszugeben.

4. Die Vorrichtung gemäß Anspruch 3, bei der die Potentialreplikationseinrichtungen (22, 23) jeweils einen Differenzverstärker und einen npn-Transistor umfassen, wobei die Basis des npn-Transistors mit dem Ausgang des Differenzverstärkers und der Emitter des npn-Transistors mit dem invertierenden Eingang des Differenzverstärkers verbunden sind.

5. Die Vorrichtung gemäß einem der vorhergehenden Ansprüche, bei der die Entladeeinheiten (25) einen Strombegrenzungswiderstand (26) und einen Schalter (27) enthalten, wobei der Schalter (27) ausgebildet ist, auf einen ersten logischen Pegel des Steuersignals den Entladestrom fließen zu lassen und auf einen zweiten logischen Pegel des Steuersignals einen Stromfluss zu unterbinden, und wobei der Strombegrenzungswiderstand (26) ausgebildet ist, den Entladestrom zu begrenzen.

6. Die Vorrichtung gemäß Anspruch 5, bei der die ersten Vergleicher (24) ausgebildet sind, das Steuersignal mit dem ersten logischen Pegel auszugeben, wenn eine Zellpaarspannung des zugeordneten Paares von Batteriezellen (1) größer ist als die minimale Zellpaarspannung aller Zellpaarspannungen der Paare von Batteriezellen (1) zuzüglich einer Offsetspannung.

7. Die Vorrichtung gemäß einem der vorhergehenden Ansprüche, bei dem die Mehrzahl der seriengeschalteten Widerstände (13) jeweils einen Widerstandswert aufweisen, der einem Quotienten der minimalen Zellpaarspannung aller Zellpaarspannungen der Paare von Batteriezellen (1) und des zu der minimalen Zellpaarspannung aller Zellpaarspannungen der Paare von Batteriezellen (1) proportionalen Stroms entspricht.

8. Die Vorrichtung gemäß einem der vorhergehenden Ansprüche, bei dem die Messvorrichtung (12) eine Anzahl n/2 von Differenzverstärkern aufweist, wobei jeder der Differenzverstärker ein Paar von Transistoren (12-1, 12-2) umfasst, deren Emitter oder Source miteinander und mit einen Eingang für eine Stromquelle (20) und deren Steuerelektroden mit einem jeweiligen von zwei Signaleingängen des Differenzverstärkers verbunden sind.

9. Die Vorrichtung gemäß Anspruch 8, bei der der Eingang für die Stromquelle (20) eines ersten der Differenzverstärker mit einer Stromquelle (20) und der Kollektor oder die Drain eines der Transistoren (12-2) des Paares von Transistoren (12-1, 12-2) mit dem Eingang für die Stromquelle (20) eines weiteren der Differenzverstärker verbunden sind, so dass sich eine Kaskadierung der Differenzverstärker ergibt.

10. Eine Batterie mit einer geradzahligen Mehrzahl größer oder gleich 4 von in Reihe geschalteten Batteriezellen (1) und einer mit den Batteriezellen (1) verbundenen Vorrichtung gemäß einem der vorhergehenden Ansprüche.

11. Ein Kraftfahrzeug mit einem elektrischen Antriebsmotor zum Antreiben des Kraftfahrzeuges und einer mit dem elektrischen Antriebsmotor verbundenen Batterie gemäß dem vorhergehenden Anspruch.

## Claims

1. A device for cell balancing of an even number n of battery cells (1) connected in series of a battery, wherein n is at least 4 and the n battery cells (1) divide into n/2 pairs of adjacent battery cells (1), the device comprising a plurality of charge balancing units, which are each connected or connectable to an allocated pair of the pairs of adjacent battery cells (1) and which are designed to adapt to one another the cell voltages of the battery cells (1) of the allocated pair of adjacent battery cells (1), and a measuring device (12) connected to the charge balancing units, said measuring device being designed to generate a current proportional to a minimum cell pair voltage of all cell pair voltages of the pairs of battery cells (1) and to output said current to a number n/2 of resistors (13) connected in series, **characterized by** a number n/2 of first comparators (24), which each have a first input connected to the first or the second pole of the first battery cell (1) of an allocated pair of battery cells (1), a second input connected to a second of the respective adjacent resistors (13), and an output connected to a control electrode of one of n/2 discharge units (25), and are designed to compare a first voltage applied to the first input of the comparator (24) with a second voltage applied to the second input of the comparator (24) and to output a control signal dependent on a result of the comparison to the control electrode of the respective discharge unit (25), wherein the n/2 discharge units (25) are connected parallel to a respective pair of battery cells (1) and are designed, depending on the control signal, to allow a discharge current to flow from the respective pair of battery cells (1).

2. The device according to Claim 1, in which each charge balancing unit contains a voltage divider (2-1, 2-2) connected or connectable to a first pole of a first battery cell (1) of a pair of battery cells (1) allocated to the respective charge balancing unit and connected or connectable to a second pole of a second battery cell (1) of the allocated pair of battery cells (1), and a second comparator (3), wherein the second comparator (3) has a first input connected to a centre tap of the voltage divider (2-1, 2-2), a second input connected or connectable to a second pole of the first battery cell (1) and to a first pole of the second battery cell (1), and an output connected to the second input, and is designed to output an output current dependent on a voltage difference between a second voltage at the first input and a third voltage at the second input, and wherein the voltage divider (2-1, 2-2) is designed to output at its centre tap a partial voltage that corresponds to half a cell pair voltage between the first pole of the first battery cell (1) and the second pole of the second battery cell (1) of the pair of battery cells (1).

3. The device according to one of Claims 1 or 2, comprising a number (n/2-1) of potential replication means (22, 23), which are each connected between two adjacent resistors (13) of the plurality of resistors (13) and are designed to replicate a potential at a first pole of a first or second battery cell (1) of a pair of battery cells (1) allocated to the respective potential replication means (22, 23) and to output said potential to a first of the respective two adjacent resistors (13).

4. The device according to Claim 3, in which the potential replication means (22, 23) each comprise a differential amplifier and an npn transistor, wherein the base of the npn transistor is connected to the output of the differential amplifier, and the emitter of the npn transistor is connected to the inverting input of the differential amplifier.

5. The device according to one of the preceding claims, in which the discharge units (25) contain a current-limiting resistor (26) and a switch (27), wherein the switch (27) is designed to allow the discharge current to flow at a first logical level of the control signal and to suppress a current flow at a second logical level of the control signal, and wherein the current-limiting resistor (26) is designed to limit the discharge current.

6. The device according to Claim 5, in which the first comparators (24) are designed to output the control signal at the first logical level if a cell pair voltage of the allocated pair of battery cells (1) is greater than the minimum cell pair voltage of all cell pair voltages of the pairs of battery cells (1) plus an offset voltage.

7. The device according to one of the preceding claims, wherein the plurality of resistors (13) connected in series each have a resistance value that corresponds to a quotient of the minimum cell pair voltage of all cell pair voltages of the pairs of battery cells (1) and of the current proportional to the minimum cell pair voltage of all cell pair voltages of the pairs of battery cells (1).

8. The device according to one of the preceding claims, in which the measuring device (12) has a number n/2 of differential amplifiers, wherein each of the differential amplifiers comprises a pair of transistors (12-1, 12-2), of which the emitters or sources are connected to one another and to an input for a current source (20), and of which the control electrodes are each connected to a respective one of two signal inputs of the differential amplifier.

9. The device according to Claim 8, wherein the input for the current source (20) of a first of the differential amplifiers is connected to a current source (20), and the collector or the drain of one of the transistors (12-2) of the pair of transistors (12-1, 12-2) is connected to the input for the current source (20) of a further of the differential amplifiers, such that the differential amplifiers are cascaded.

10. A battery comprising an even plurality, greater than or equal to 4, of battery cells (1) connected in series and a device, according to one of the preceding claims, connected to the battery cells (1).

11. A motor vehicle comprising an electric drive motor for driving the motor vehicle and a battery, according to the preceding claim, connected to the electric drive motor.

## Revendications

1. Dispositif d'équilibrage de cellules d'un nombre pair n de cellules de batterie (1) branchées en série, n étant au moins égal à 4 et les n cellules de batterie (1) étant organisées en n/2 paires de cellules de batterie (1) respectivement voisines, le dispositif comprenant une pluralité d'unités d'équilibrage de charge respectivement reliées ou pouvant être reliées avec l'une associée des paires de cellules de batterie (1) voisines, lesquelles sont configurées pour équilibrer les unes aux autres les tensions de cellule des cellules de batterie (1) de la paire associée de cellules de batterie (1) voisines, et comprenant un dispositif de mesure (12) relié aux unités d'équilibrage de charge, lequel est configuré pour générer un courant proportionnel à une tension de paire de cellules minimale de toutes les tensions de paire de cellules des paires de cellules de batterie (1) et le délivrer à un nombre n/2 de résistances (13) branchées en série, **caractérisé par** un nombre n/2 de premiers comparateurs (24) qui possèdent respectivement une première entrée reliée au premier ou au deuxième pôle de la première cellule de batterie (1) d'une paire associée de cellules de batterie (1), une deuxième entrée reliée à une deuxième des résistances (13) voisines respectives et une sortie reliée à une électrode de commande de l'une de n/2 unités de décharge (25) et qui sont configurés pour comparer une première tension appliquée à la première entrée du comparateur (24) avec une deuxième tension appliquée à la deuxième entrée du comparateur (24) et délivrer à l'électrode de commande de l'unité de décharge (25) respective un signal de commande dépendant du résultat de la comparaison, les n/2 unités de décharge (25) étant branchées en parallèle avec une paire respective de cellules de batterie (1) et étant configurées pour, en fonction du signal de commande, laisser circuler un courant de décharge depuis la paire respective de cellules de batterie (1).

2. Dispositif selon la revendication 1, dans lequel chaque unité d'équilibrage de charge contient un diviseur de tension (2-1, 2-2), relié ou qui peut être relié à un premier pôle d'une première cellule de batterie (1) d'une paire de cellules de batterie (1) associée à l'unité d'équilibrage de charge respective et à un deuxième pôle d'une deuxième cellule de batterie (1) de la paire associée de cellules de batterie (1), ainsi qu'un deuxième comparateur (3), le deuxième comparateur (3) possédant une première entrée reliée à une prise centrale du diviseur de tension (2-1, 2-2), une deuxième entrée reliée ou qui peut être reliée à un deuxième pôle de la première cellule de batterie (1) et un premier pôle de la deuxième cellule de batterie (1) ainsi qu'une sortie reliée à la deuxième entrée et étant configuré pour délivrer un courant de sortie dépendant d'une différence de tension entre une deuxième tension à la première entrée et une troisième tension à la deuxième entrée, et le diviseur de tension (2-1, 2-2) étant configuré pour délivrer à sa prise centrale une tension partielle qui correspond à la moitié d'une tension de paire de cellules entre le premier pôle de la première cellule de batterie (1) et le deuxième pôle de la deuxième cellule de batterie (1) de la paire de cellules de batterie (1).

3. Dispositif selon l'une des revendications 1 ou 2, comprenant un nombre (n/2 - 1) de systèmes de réplication de potentiel (22, 23) qui sont respectivement branchés entre deux résistances voisines (13) de la pluralité de résistances (13) et qui sont configurés pour répliquer un potentiel présent sur un premier pôle d'une première ou d'une deuxième cellule de batterie (1) de l'une des paires de cellules de batterie (1) associées au système de réplication de potentiel (22, 23) correspondant et le délivrer au niveau d'une première des deux résistances (13) voisines respectives.

4. Dispositif selon la revendication 3, dans lequel les systèmes de réplication de potentiel (22, 23) comprennent respectivement un amplificateur différentiel et un transistor NPN, la base du transistor NPN étant reliée à la sortie de l'amplificateur différentiel et l'émetteur du transistor NPN à l'entrée inverseuse de l'amplificateur différentiel.

5. Dispositif selon l'une des revendications précédentes, dans lequel les unités de décharge (25) contiennent une résistance de limitation de courant (26) et un commutateur (27), le commutateur (27) étant configuré pour laisser passer le courant de décharge en présence d'un premier niveau logique du signal de commande et pour empêcher un passage du courant en présence d'un deuxième niveau logique du signal de commande, et la résistance de limitation de courant (26) étant configurée pour limiter le courant de décharge.

6. Dispositif selon la revendication 5, dans lequel le premier comparateur (24) est configuré pour délivrer le signal de commande avec le premier niveau logique lorsqu'une tension de paire de cellules de la paire de cellules de batterie (1) associée est supérieure à la tension de paire de cellules minimale de toutes les tensions de paire de cellules des paires de cellules de batterie (1) plus une tension de décalage.

7. Dispositif selon l'une des revendications précédentes, dans lequel la pluralité de résistances (13) branchées en série possèdent respectivement une valeur de résistance qui correspond à un quotient de la tension de paire de cellules minimale de toutes les tensions de paire de cellules des paires de cellules de batterie (1) et du courant proportionnel à la tension de paire de cellules minimale de toutes les tensions de paire de cellules des paires de cellules de batterie (1).

8. Dispositif selon l'une des revendications précédentes, dans lequel le dispositif de mesure (12) possède un nombre n/2 d'amplificateurs différentiels, chacun des amplificateurs différentiels comprenant une paire de transistors (12-1, 12-2) dont l'émetteur ou la source sont reliés ensemble et avec une entrée pour une source de courant (20) et dont les électrodes de commande sont reliées avec l'une respective de deux entrées de signal de l'amplificateur différentiel.

9. Dispositif selon la revendication 8, dans lequel l'entrée pour la source de courant (20) d'un premier des amplificateurs différentiels est reliée à une source de courant (20) et le collecteur ou le drain de l'un des transistors (12-2) de la paire de transistors (12-1, 12-2) à une entrée pour la source de courant (20) d'un autre des amplificateurs différentiels, de sorte qu'une mise en cascade des amplificateurs différentiels est obtenue.

10. Batterie comprenant une pluralité paire supérieure ou égale à 4 de cellules de batterie (1) branchées en série et un dispositif selon l'une des revendications précédentes relié aux cellules de batterie (1).

11. Véhicule automobile comprenant un moteur d'entraînement électrique servant à la propulsion du véhicule automobile et une batterie selon la revendication précédente reliée au moteur d'entraînement électrique.
